(19) **Europäisches Patentamt / European Patent Office / Office européen des brevets**

(11) **EP 1 014 541 B1**

(12) **EUROPEAN PATENT SPECIFICATION**

(45) Date of publication and mention of the grant of the patent:
**29.04.2009 Bulletin 2009/18**

(21) Application number: **98941739.9**

(22) Date of filing: **07.09.1998**

(51) Int Cl.:
**H02K 21/16** *(2006.01)*　　**H02K 1/27** *(2006.01)*
**H02K 1/16** *(2006.01)*

(86) International application number:
**PCT/JP1998/003996**

(87) International publication number:
**WO 1999/013556 (18.03.1999 Gazette 1999/11)**

(54) **PERMANENT MAGNET SYNCHRONOUS MOTOR**

SYNCHRONMOTOR MIT DAUERMAGNETEN

MOTEUR SYNCHRONE A AIMANT PERMANENT

(84) Designated Contracting States:
**DE FR GB**

(30) Priority: **08.09.1997 JP 24293997**
**08.09.1997 JP 24294097**

(43) Date of publication of application:
**28.06.2000 Bulletin 2000/26**

(60) Divisional application:
**05021517.7 / 1 624 553**

(73) Proprietor: **Panasonic Corporation**
**Kadoma-shi**
**Osaka 571-8501 (JP)**

(72) Inventors:
• **MURAKAMI, Hiroshi**
**Osaka 565-0861 (JP)**
• **HONDA Yukio**
**Osaka 576-0052 (JP)**
• **YOKOTE, Shizuka**
**Osaka-shi**
**Osaka 533-0012 (JP)**
• **ASANO, Yoshinari**
**Fukui 915-0816 (JP)**
• **WADA, Yukitoshi**
**Osaka 576-0052 (JP)**
• **HIROSE, Hideo**
**Osaka 573-0076 (JP)**
• **MATSUSHITA, Yasuaki**
**Kyotanabe,**
**Kyoto 610-0341 (JP)**

(74) Representative: **Grünecker, Kinkeldey,**
**Stockmair & Schwanhäusser**
**Anwaltssozietät**
**Leopoldstraße 4**
**80802 München (DE)**

(56) References cited:
EP-A- 0 642 210　　WO-A-94/22206
DE-A- 4 213 372　　JP-A- 5 304 737
JP-A- 6 245 418　　JP-A- 8 251 891
JP-A- 8 331 823　　JP-A- 9 056 099
JP-A- 9 182 331　　JP-A- 62 114 454
JP-U- 3 060 852　　JP-U- 6 066 277
US-A- 5 006 045　　US-A- 5 220 228
US-A- 5 250 867　　US-A- 5 793 178

• ZHU Z Q ET AL: "Influence of design parameters on cogging torque in permanent magnet machines" 18 May 1997 (1997-05-18), ELECTRIC MACHINES AND DRIVES CONFERENCE RECORD, 1997. IEEE INTERNATIONAL MILWAUKEE, WI, USA 18-21 MAY 1997, NEW YORK, NY, USA,IEEE, US, PAGE(S) MA1-31 , XP010231718 ISBN: 0-7803-3946-0 paragraph III :"CHOICE OF SLOT AND POLE NUMBER COMBINATION"; Paragraph VI :"STATOR SLOT OPENING"; figure 5
• PATENT ABSTRACTS OF JAPAN vol. 17, no. 593 (E-1454), 28 October 1993 (1993-10-28) -& JP 05 176487 A (TOSHIBA CORP), 13 July 1993 (1993-07-13)

EP 1 014 541 B1

**Description**

Technical Field

The present invention relates to permanent magnet synchronous motors, and particularly relates to a permanent magnet synchronous motor having a stator with concentrated windings.

Background Art

A high power permanent magnet synchronous motor, in general, uses numbers of teeth of a stator and employs a distributed winding method so that the composite magnetomotive force of this motor can form approximately a sine wave. Permanent magnets of the rotor of this synchronous motor employs magnets made of rare-earth featuring a high density of magnetic flux as well as large withstanding force against demagnetization. Further a sensor detects rotational phase of the rotor so that current phase can be controlled responsive to a rotor position.

However, the distributed winding method requires complicated winding processes, and this lowers winding-efficiency. The rare earth magnet and the sensor detecting the rotational phase are expensive, and these elements boost the cost of this motor.

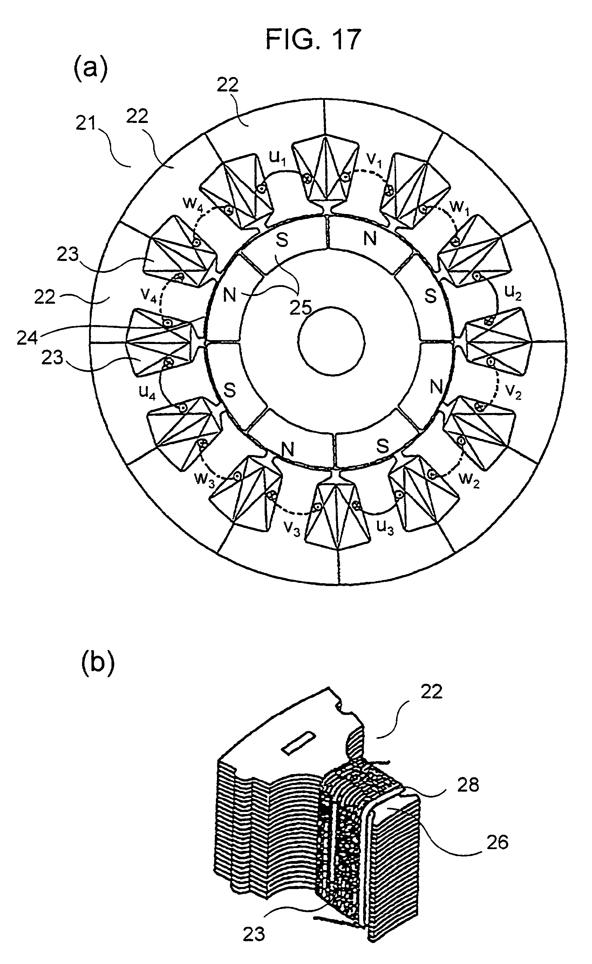

An inexpensive permanent magnet synchronous motor is thus developed as shown in Fig. 17(a) in order to overcome the problems discussed above. Stator 21 is formed by cores 22 (refer to Fig. 17(b)) divided corresponding to respective teeth. Teeth 26 of divided cores 22 are wound with insulating paper 28, and coils are wound on top of that, thereby forming concentrated winding coils 23. Divided cores 22 with the concentrated windings are incorporated into a ring and fixed by welding, caulking or laser-beam-welding to form the stator having the concentrated windings. Permanent magnets 25 of rotor 24 are made of inexpensive ferrite magnet. Regarding the current-phase control, a zero-cross point of an inductive voltage-produced by a neutral coil which allows no driving current to run through-is detected so that 120° excitation can be executed by rectangular waveforms.

In this permanent magnet synchronous motor, 3n (n = a natural number) pieces of teeth of stator 21 are arranged with equal intervals and the teeth are coupled each other to form three phases through "Y" letter connecting method. Permanent magnets with 2n (n = a natural number) poles are arranged to face stator 21. As such, it is preferable to prepare 2n poles of permanent magnets for 3n pieces of teeth in the permanent magnet synchronous motor.

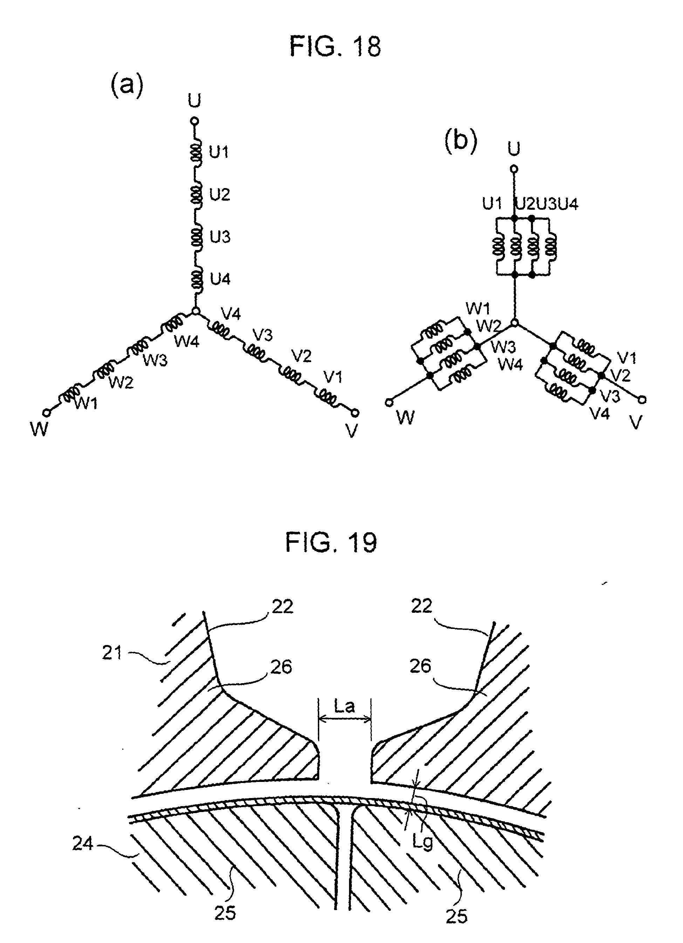

In the example shown in Fig. 17, a number of poles of rotor 24 is 8 poles (2n, n = 4), a number of stator teeth is 12 (3n, n = 4). Respective teeth are wound with coils u1, v1, w1, u2, .....v4, w4 sequentially. Each coil is connected in series as shown in Fig. 18(a) or in parallel as in Fig. 18(b) to form phases U, V and W.

Meanwhile, in an ordinary permanent magnet synchronous motor, the following relation is established so that leakage flux between each tooth can be reduced: La > approx. 2 Lg, (refer to Fig. 19) where La is a clearance between teeth 26 and 26, and Lg is an air gap between stator 21 and rotor 24. Permanent magnets 25 have even thickness from an end to the other end in a circumference direction, and magnets 25 are arranged so that each end thereof faces with each other adjacently. However, if this structure is applied to the inexpensive permanent magnet synchronous motor as discussed above, the permanent magnets encounter local demagnetization due to the following reason, whereby a desirable output cannot be produced by the motor.

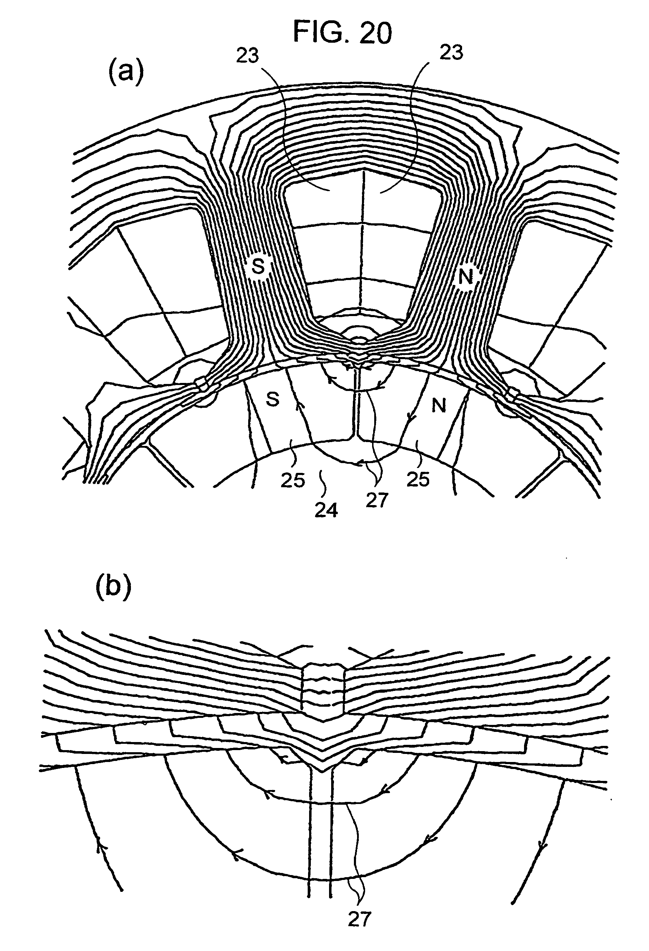

The reason is this: Since the motor employs the concentrated winding method, a tooth bears a different pole from that of its adjacent tooth, thereby increasing inductance. This situation allows the rotor to be subject to demagnetization. In particular, when the motor is in a sensor-less operation, the permanent magnets of the rotor tend to be demagnetized at starting or at out-of-sync condition. In other words, as shown in Fig. 20, stator coil 23 produces a pole counteracting a pole of permanent magnet 25 of rotor 24, and parts of magnetic field produced by coil 23 invade into permanent magnets 25 as demagnetizing magnetic field 27. When permanent magnets 25 are made of ferrite magnet, demagnetizing magnetic field 27 renders magnets 25 into break down condition. As a result, magnets 25 are demagnetized.

Numbers of motors with concentrated windings have been available in the market; however, a clearance between teeth is so narrow that the permanent magnets are subject to demagnetization when the polarities of adjacent teeth are opposite with each other. When the permanent magnet made of ferrite having small coercive force is used, the withstanding force against demagnetization becomes poor. When the motor is in the sensorless operation in particular, reverse magnetic field is provably applied to the permanent magnets at staring or out-of-sync condition, thereby demagnetizing the permanent magnets with ease.

The document "Influence of design parameters an cogging torque in permanent magnet machines" discloses a motor according to the preamble of claim 1.

The present invention addresses the problems discussed above, and aims to provide a permanent magnet synchronous motor, in which the concentrated winding method is employed and yet the withstanding force of the permanent magnets against demagnetization is enhanced.

Summary of the Invention

In a permanent magnet synchronous motor according to claim 1, the following relation is established:

$$0.3 \, \text{Lg} < \text{La} \leqq 2.0 \, \text{Lg},$$

where La is a clearance between respective teeth,

Lg is an air gap between the stator and rotor. Since the clearance between teeth is set at not more than two times of the air gap Lg, demagnetizing magnetic flux is restrained from flowing toward the rotor. Further when polarities of the coil and rotor oppose each other, the rotor magnets are not easily subjected to the demagnetizing magnetic field. As a result, the withstanding force against the demagnetization is enhanced. Meanwhile, when La is too small, the leakage magnetic flux between teeth becomes greater, and yet, edges of the stator may interfere with each other due to mold errors produced when divided cores are manufactured. Therefore, La is desirably greater than 0.3 Lg.

The relation 2 Lg < Lb < 5 Lg is established so that the demagnetizing magnetic flux can flow toward the teeth and can be restrained from flowing toward the rotor, where Lb is a depth of the stator edge and Lg is an air gap between the stator and rotor. As a result, the same effect as discussed above can be expected. Meanwhile, when Lb is too large, the leakage magnetic flux to be shorted grows too large, thereby lowering the motor output. Therefore, Lb is desirably set at smaller than 5 Lg. Further, when the two relations discussed above are satisfied, the greater withstanding force against demagnetization is obtainable.

In an edge of tooth of the stator, i.e., the edge of trailing side in the rotating direction of the rotor out of the edges of teeth opposing with each other, or both of these edges, the side facing the rotor is cut away so that an air gap on tooth edge can be enlarged, and this can restrain the demagnetizing magnetic flux from flowing toward the rotor. As a result, the same effect discussed above is obtainable. Further, in this case, at the edge where the rim side facing the rotor has been cut away, the other side to the rotor is protruded so that the depth of the tooth edge is maintained, and this can restrain the demagnetizing magnetic flux from running toward the rotor. As a result, the withstanding force against the demagnetization can be further enhanced. When the three conditions discussed above are satisfied, the greater withstanding force against the demagnetization is obtainable.

When the permanent magnets of the rotor are made of ferrite magnet, which is inexpensive than rare earth magnet and vulnerable to demagnetization, the structure discussed above can enhance the withstanding force of the inexpensive permanent magnets against the demagnetization. Therefore, an outstanding effect can be produced in this case. The stator formed by the divided cores realizes independent and efficient winding on respective divided cores before they are assembled into the stator. This can substantially increase the productivity and lower the cost. If this structure is applied to the motor driven by the sensor-less mechanism, an outstanding effect is expected because the sensor-less operation, in general, is vulnerable to demagnetization. In addition to the effects discussed above, when this permanent magnet synchronous motor is employed in compressors of air-conditioners or electric refrigerators, substantial effects are obtainable by lowering the costs of these appliances.

Brief Descriptions of Drawings

Fig. 1(a) is a cross section of a permanent magnet synchronous motor , and Fig. 1(b) is an enlarged view of an important part of the motor.

Fig. 2 is a graph illustrating a relation between the ratio of a slit clearance vs. an air-gap between stator and rotor and a demagnetization rate.

Fig. 3 is an enlarged view of an important part of a permanent magnet synchronous motor in accordance with a second exemplary embodiment of the present invention.

Fig. 4 is a graph concerning the first embodiment of the invention and illustrating a relation between a ratio of a depth of a tooth edge vs. an air gap between stator and rotor and a demagnetization rate, and a relation between the same ratio and a torque rate.

Fig. 5 is an enlarged view of an important part of a permanent magnet synchronous motor in accordance with a second embodiment of the present invention.

Fig. 6(a) is a cross section of a permanent magnet synchronous motor, and Fig. 6(b) is an enlarged view of an important part of the motor.

Fig. 7 illustrates an operation of the motor of fig 6 (a)

Fig. 8 is a cross section of a permanent magnet synchronous motor.

Fig. 9 illustrates a permanent magnet synchronous motor, and Fig. 9(a) through Fig. 9(c) are cross sections of respective modifications, Fig. 9(d) is a cross sectional enlarged view of an important part shown in Fig. 9(a).

Fig. 10 illustrates a permanent magnet synchronous motor, and Fig. 10(a) through Fig. 10(c) are cross sections of respective modifications, Fig. 10(d) is a cross sectional enlarged view of an important part shown in Fig. 10(a).

Fig. 11 is a cross sectional enlarged view of the modification shown in Fig. 10(c).

Fig. 12 illustrates an operation of the motor of fig. 7

Fig. 13 is a cross section of a permanent magnet synchronous motor .

Fig. 14 illustrates an operation of the motor of fig 12

Fig. 15 illustrates an operation of a modification of the motor of fig 12.

Fig. 16 shows cross sectional views of other motors

Fig. 17 illustrates a construction of a conventional permanent magnet synchronous motor, Fig. 17(a) is a cross section of the motor and Fig. 17(b) is a perspective view of a divided core of the motor.
Fig. 18 illustrates coil-couplings of the conventional motor.
Fig. 19 is a cross sectional enlarged view of an important part of the conventional motor.
Fig. 20 illustrates demagnetization in the conventional motor.

Detailed Description

(Exemplary Embodiment 1)

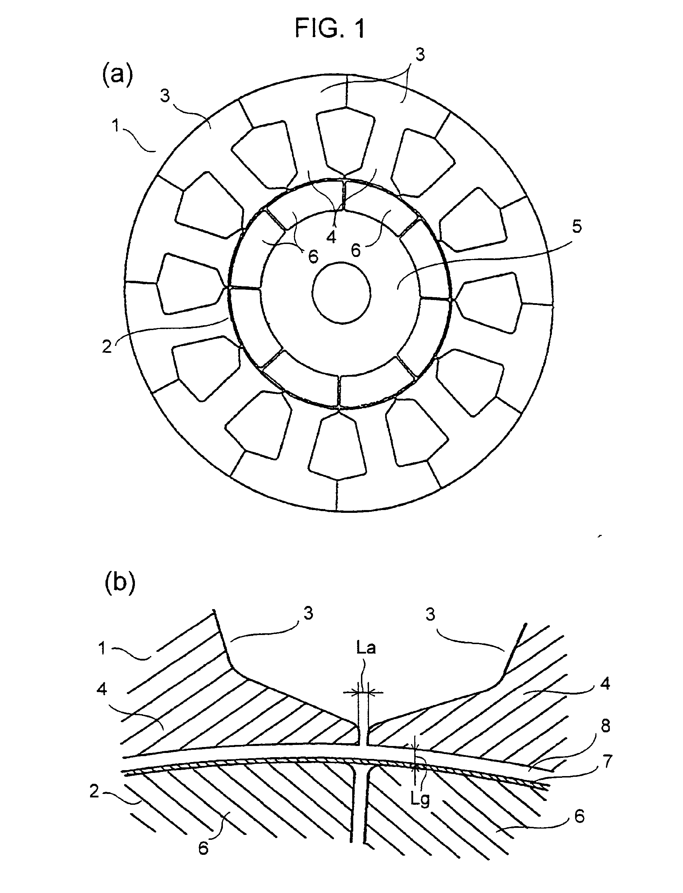

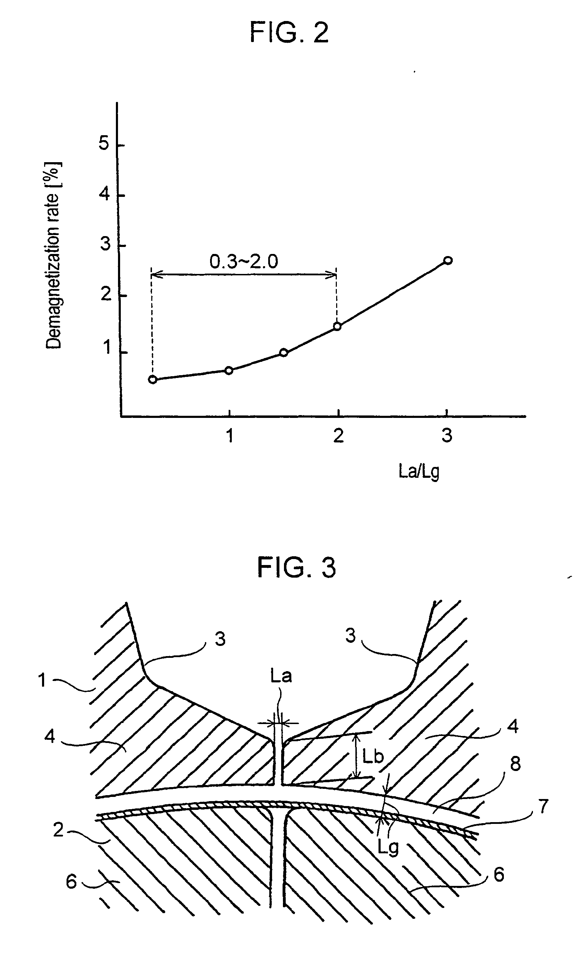

A motor is demonstrated hereinafter with reference to Fig. 1 and Fig. 2.

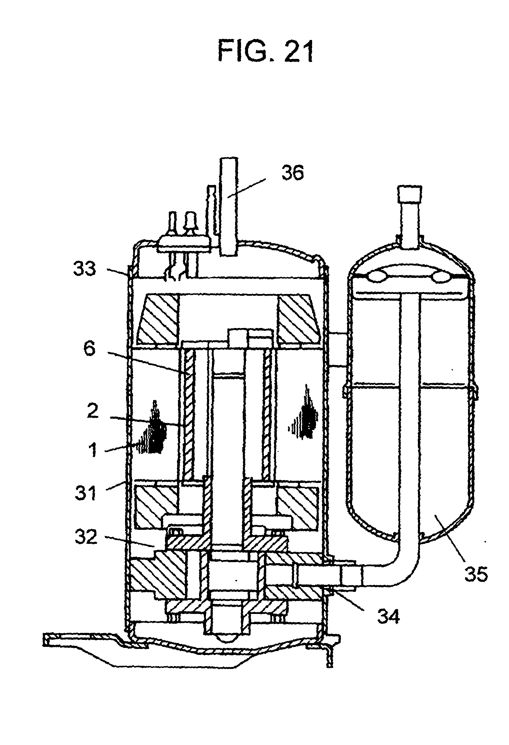

In Fig. 1, stator 1 comprises divided cores 3 in a quantity corresponding to a number of slots. Teeth 4 of respective divided cores 3 are wound with coils (not shown) independently, i.e. the concentrated winding method is employed. Rotor 2 comprises rotor core 5 formed of laminated silicon steel sheet and Fig. 21 illustrates a compressor used in an air-conditioner or an electric refrigerator. permanent magnets 6 made of plurality of ferrite magnets, where magnets 6 are fixedly mounted to the outer wall of rotor core 5. A rotary shaft (not shown) extending through and fixed to the center of rotor core 5 is journaled by a bearing. Hollow cylinder 7 made of stainless steel sheet is fit onto the outer wall of rotor 2, or a reinforcing tape is wound around the outer wall so that necessary strength against centrifugal force is obtained.
The motor shown in the drawing has four pairs of polarity (= n), rotor 2 has eight permanent magnets (= 2n), and stator 1 comprises 12 pieces of divided cores 3 (= 3n). Regarding the current control of the coils wound on stator 1, a zero-cross point of an inductive voltage- produced by a neutral coil which allows no driving current to run through-is detected so that 120° excitation can be executed by rectangular waveforms. As illustrated in Fig. 1(b), teeth clearance La is set to meet the relation of $0.3 \, Lg < La \le 2.0 \, Lg$, where La = clearance between teeth 4 and 4,
[0021] Lg = air gap 8 between stator 1 and rotor 2. Preferable values of Lg ranges 0.4 - 0.6 mm, and those of La ranges 0.4 - 0.3 mm.
In the construction discussed above, teeth clearance La between the adjacent teeth edges is set at not greater than two times of air-gap Lg. Therefore, this structure allows leakage flux to flow toward the adjacent teeth and thus restrains the leakage flux from flowing toward rotor 2. Even if the coil on stator 1 is at a position to counteract the polarity of rotor 2, the polarity of rotor 2 is difficult to be subject to demagnetization. The withstanding force of permanent magnet 6 on rotor 2 against the demagnetization is thus increased.
Fig. 2 illustrates a relation between La/Lg and a demagnetizing rate. In the conventional motor, La/Lg is set at greater than 2, and at that time, the demagnetization rate is greater than 1.5%, and this makes it difficult to produce an output. However, setting La/Lg at not greater than 2.0 lowers the demagnetization rate down to less than 1.5%, thereby obtaining the demagnetization rate practically needed. Since La is set at greater than 0.3 Lg, the leakage flux between teeth 4 and 4 does not grow too much. Further, there is no chance for stator 1 to be assembled with poor accuracy due to errors in mold of divided cores 3, for the errors could cause the teeth edges to interfere with each other.
Permanent magnets 6 made of ferrite magnets are less expensive than rare earth magnet. Indeed magnets 6 are vulnerable to demagnetization, but the withstanding force against demagnetization can be increased as discussed above. Stator 1 is formed of divided cores 3, and then individual divided cores 3 can be wound independently and efficiently before being assembled into stator 1, and this structure dramatically improve the productivity of stator 1. As a result, the cost can be substantially reduced.

(Exemplary Embodiment 2)

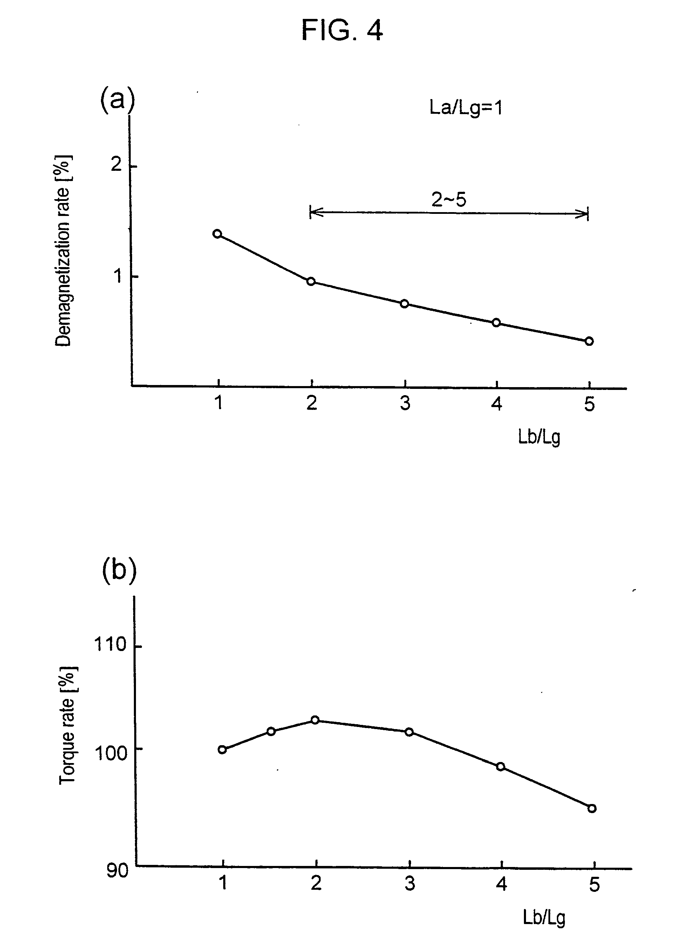

A permanent magnet synchronous motor in accordance with the first exemplary embodiment of the invention is demonstrated hereinafter with reference to Fig. 3 and Fig. 4. The like elements used in the first embodiment bear the like reference marks, and the descriptions thereof are thus omitted here.
As illustrated in Fig. 3, La and Lb are set to meet the relations of:

$$0.3 \, Lg < La \le 2.0 \, Lg,$$

and 2 Lg<Lb< 5 Lg,
where La = clearance between teeth 4 and 4,
Lb = depth of edge of tooth 4 of stator 1,
Lg = air gap 8 between stator 1 and rotor 2.
In the construction discussed above, in addition to the arrangements done in the first embodiment, tooth depth Lb is set at greater than two times of air-gap Lg, thereby further restraining the leakage flux from flowing toward rotor 2. As a result, the withstanding force against the demagnetization can be increased. Since Lb is set at less than 5 Lg, the leakage flux shorting between teeth 4 and 4 does not grow too much, and thus the motor output has no chance to lower.
Fig. 4(a) and Fig. 4(b) illustrate the relation between Lb / Lg and demagnetization rate, and the relation between Lb/Lg and torque rate, in both cases La/Lg takes 1 (one). As shown in Fig. 4(a), the demagnetization rate decreases at a greater value of Lb/Lg, and as shown in Fig. 4(b) the torque rate decreases at the greater value of Lb/Lg. Thus Lb/Lg is set at greater than 2 thereby reducing the demagnetization rate, and Lb/Lg is set at less than 5 thereby preventing the torque from lowering.

The depth Lb of edges of teeth 4 of stator 1 is set at a greater value as discussed above, and even this arrangement only can also produce some effect.

(Exemplary Embodiment 3)

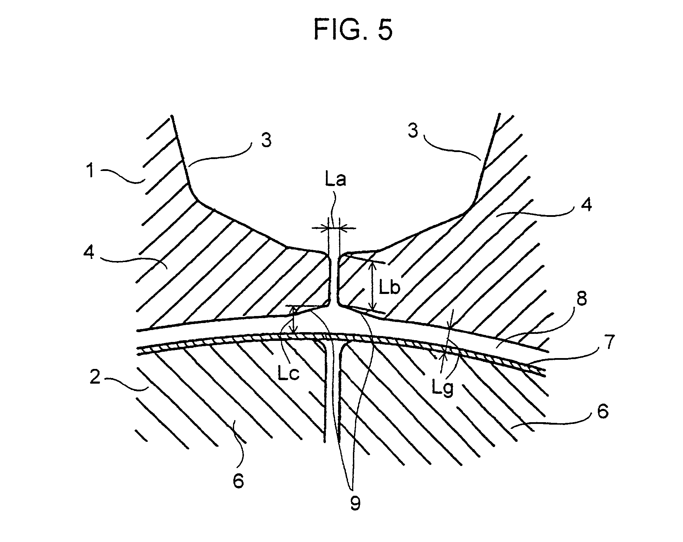

A permanent magnet synchronous motor in accordance with the second exemplary embodiment of the invention is demonstrated hereinafter with reference to Fig. 5.

In Fig. 5, in addition to the arrangements done in the second embodiment shown in Fig. 3, parts of the edges facing with each other of the adjacent teeth 4 and 4 are cut away on their rim sections facing rotor 2, and the cut-away section is called open space 9. (A clearance between tooth edge 4 and rotor 2 is referred to as Lc.)

Open space 9 can be provided only on the edge of trailing side in the rotating direction of the rotor 2 out of the edges of teeth opposing with each other.

The air gap on the edges of teeth 4 can be enlarged by providing open space 9, and this can restrain the demagnetizing magnetic flux from flowing toward the rotor. As a result, the same effect is obtainable.

At the edge of tooth 4 where the rim side facing the rotor 2 has been cut away, the other side to the rotor 2 is protruded so that the depth of the tooth edge is maintained, and this can restrain the demagnetizing magnetic flux from running toward rotor 2. As a result, the withstanding force against the demagnetization can be further enhanced.

Open space 9 simply provided on the edge of teeth 4 can also produce some effect.

(Exemplary Embodiment 4)

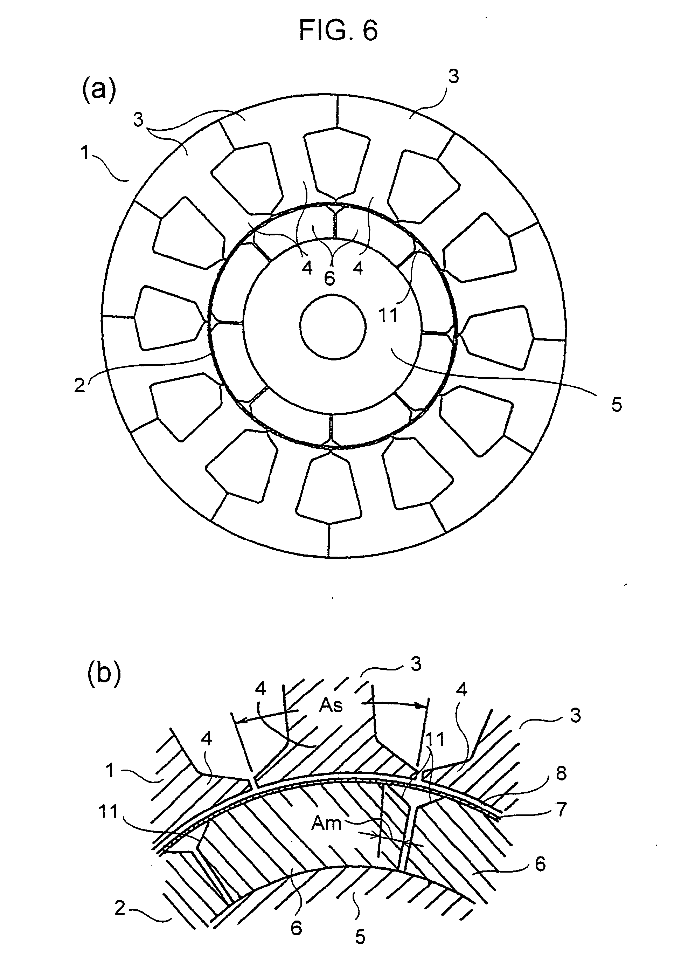

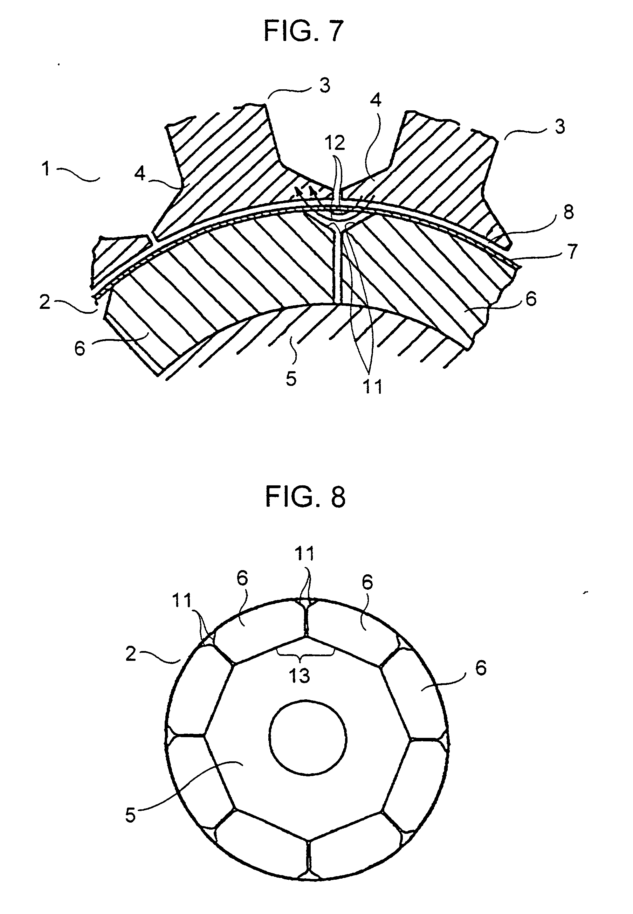

A permanent magnet synchronous motor is demonstrated hereinafter with reference to Fig. 6 and Fig. 7. In the previous embodiments 1 - 3, the shape of teeth 4 of stator 1 is modified, thereby restraining the demagnetizing magnetic flux from flowing toward rotor 2. In the following embodiments, demagnetizing magnetic flux-traveling through rotor 2-is modified so as not to travel through permanent magnets 6, so that withstanding force against demagnetization is increased.

In Fig. 6, open spaces 11 are formed on both edges of respective permanent magnets 6, where the edges on the outer rim side are used for open spaces 11. Each open space 11 is defined as shown in Fig. 6(b): Opening angle "Am" of space 11 with regard to the rotor center is set to meet this relation;

$$(1 \diagup 10)\mathrm{As} < \mathrm{Am} < (1 \diagup 4)\mathrm{As}$$

where "As" is an opening angle of tooth 4.

This structure, i.e. providing open spaces 11 on both edges of permanent magnet 6, allows demagnetizing magnetic field 12 to travel through open spaces 11 even if demagnetization magnetic field 12 protruding toward rotor 2 is produced between the edges of adjacent teeth 4. Therefore, demagnetization magnetic field 12 does not demagnetize permanent magnet 6, and the withstanding force against the demagnetization of magnet 6 is thus increased. When "Am" is less than (1/10) As, the effect discussed above cannot be produced, and when "Am" is greater than (1/4)As, the motor produces lower output or greater cogging torque.

(Exemplary embodiment 5)

A permanent magnet synchronous motor is demonstrated hereinafter with reference to Fig. 8. In embodiment 4, magnet 6 having the inner wall with an even depth with regard to the arc around the shaft center of rotor 2 is used. In this fifth embodiment, magnet 6 having the inner wall with a flat face 13 is used. This structure increases the depth of center part of magnet 6 in the rim direction, thereby increasing withstanding force at the center of magnet 6 against demagnetization.

(Exemplary Embodiment 6)

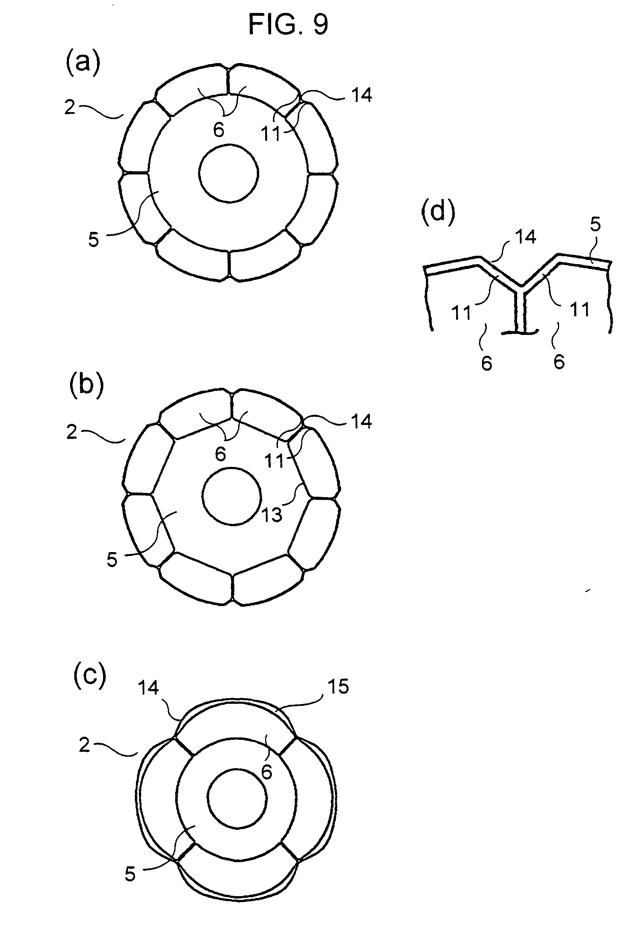

A permanent magnet synchronous motor is demonstrated hereinafter with reference to Fig. 9. In the previous embodiments 4 and 5, permanent magnets 6 are mounted on the outer wall of rotor core 5, thereby forming rotor 2. In the following embodiments including this sixth embodiment, permanent magnets 6 are buried in rotor core 5.

In Figs. 9(a), 9(b) and 9(c), open spaces 11 are formed on both edges of permanent magnet 6, where the edges on the outer rim side are used for spaces 11. This magnet 6 is buried in rotor core 5 along its outer rim. Further, as shown in detail in Fig. 9(d), cut-away sections 14 are recessed into the outer wall of rotor core 5 so that the recessed positions can correspond to respective open spaces 11. Permanent magnets 6 shown in Fig. 9 (a) have an even depth with regard to the arcs around the rotor center. Permanent magnets 6 shown in Fig. 9 (b) have a flat face 13 on their inner wall facing the radial direction of the rotor, so that each magnet 6 has a greater depth at its center. Fig. 9(c) illustrates rotor 2 having four poles, where each permanent magnet 6 has an inner wall shaping an arc with regard to the rotor center and an outer wall shaping another arc with regard to a center eccentric from the rotor-core-center outwardly in the radial direction. This another arced face 15 is protruded and both end sections of face 15 taper into radial direction, so that both the end sections function as open spaces 11.

In this embodiment, open space 11 or an equivalent section functioning as same as open space 11 is formed on both ends of each permanent magnet 6, so that the same effect is produced as the previous embodiments 4 and 5 did. Further, since this embodiment adopts interior magnets 6, if the outer wall of rotor core 5 is left as it forms circular, ferromagnetic exists outside the open space 11 or the equivalent section whereby leakage magnetic-flux travels through this ferromagnetic and shorts the magnetic circuit. However, cut-away section 14 is provided in this embodiment, and this prevents the leakage magnetic-flux from being shorted. As a result, this structure prevents, without fail, the motor from lowering its efficiency.

(Exemplary Embodiment 7)

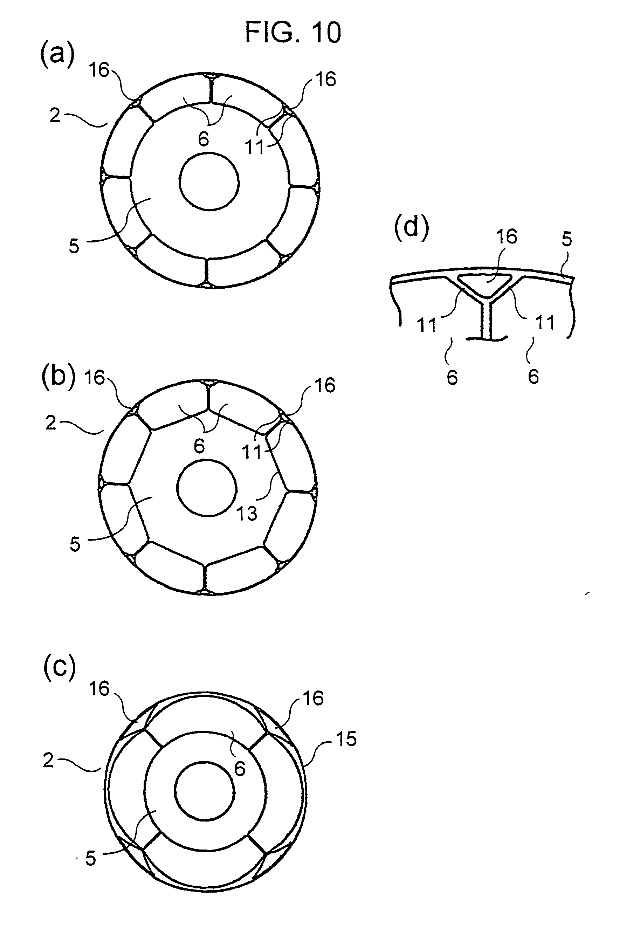

A permanent magnet synchronous motor is demonstrated hereinafter with reference to Fig. 10 through Fig. 12. The previous embodiment 6 describes the example of forming cut-away section 14 corresponding to open space 11. In this embodiment, as shown in Fig. 10(a) through Fig. 10(c), the outer wall of rotor core 5 forms a cylindrical face, and as Fig. 10(d) illustrates in detail, slit 16 is formed at the place where open space 11 would have been provided. Slit 16 can be hollow; however, it can be filled with resin or non-magnetic metal in order to maintain the strength of rotor 2.

Permanent magnets 6 shown in Fig. 10(a) have an even depth with regard to the arcs around the rotor center. Permanent magnets 6 shown in Fig. 10(b) have a flat face 13 on their inner wall facing the radial direction of the rotor, so that each magnet 6 has a greater depth at its center. Fig. 10(c) illustrates rotor 2 having four poles, where each permanent magnet 6 has an inner wall shaping an arc with regard to the rotor center and an outer wall shaping another arc with regard to a center eccentric from the rotor-core-center outwardly in the radial direction. This another arced face 15 is protruded and both end sections of face 15 taper into radial direction, so that both the end sections function as open spaces 11.

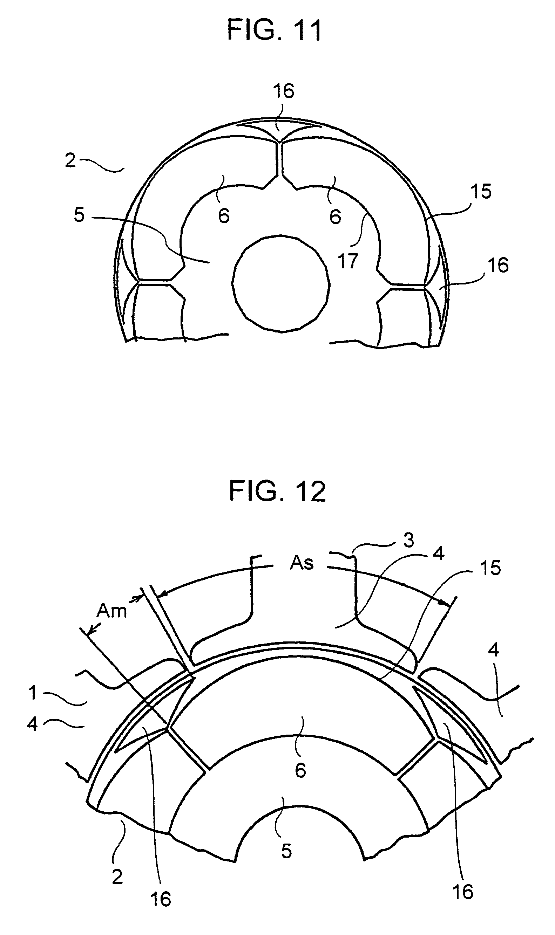

Permanent magnets 6 shown in Fig. 11 is modified from magnet 6 shown in Fig. 10(c) in this way: inner wall facing the radial direction forms an arced face 17 having the same eccentric center as arced face 15.

In this embodiment, opening angle "Am" of slit 16 is set to meet this relation;

$$(1 / 10)As < Am < (1 / 4)As,$$

where "As" is an opening angle of tooth 4. An opening angle of the space where slit 16 does not exist is set at about equal to the opening angle of tooth 4, i.e. within the range of (1.0 - 1.4)As.

This structure, i.e. cut-away section 14 is replaced with slit 16, produces the same effect as the embodiment 6 does as illustrated in Fig. 9. When the opening angle "Am" of slit 16 is less than (1/10)As, the effect discussed above cannot be produced, and when "Am" is greater than (1/4)As, the motor produces lower output or greater cogging torque.

(Exemplary Embodiment 8)

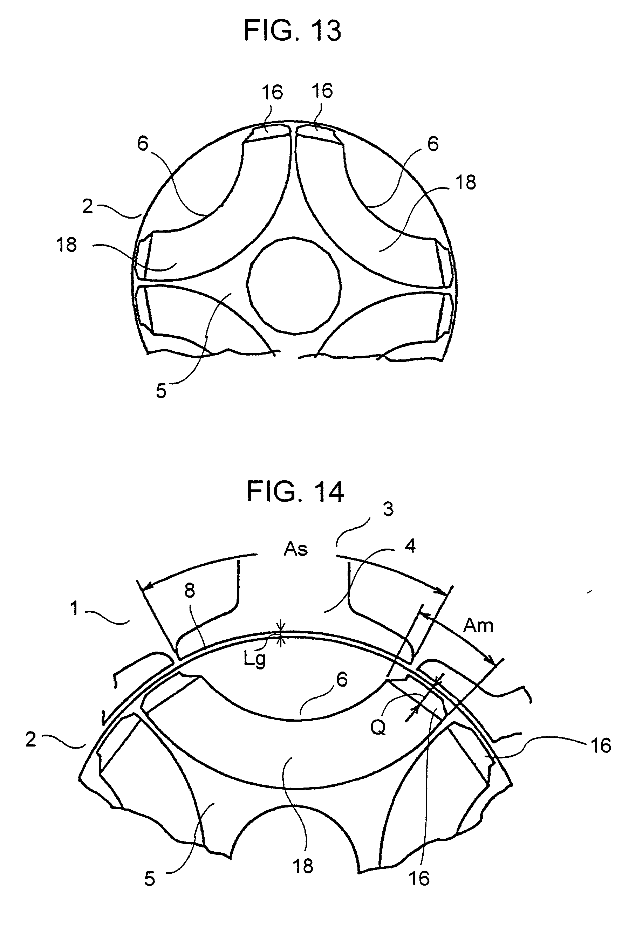

A permanent magnet synchronous motor is demonstrated hereinafter with reference to Fig. 13 through Fig. 15. In this embodiment, permanent magnet 6 to be buried into rotor 2 has its curvature-center outside rotor 2 in radial direction, i.e. a reversely arced permanent magnet 18 is used as shown in Fig. 13. Magnet ends facing the outer rim of rotor 2 are situated inside the rotor with an appropriate distance from the outer rim, and slit 16 is formed in rotor core 5 so that each end of magnet 18 can face slit 16.

As shown in Fig. 14, the relation of Lg < Q < 3 Lg is established,

where Q = distance between the end of permanent magnet 18 and the outer rim of rotor core 5; and
Lg = air gap between stator 1 and rotor 2.
If Q is less than Lg, demagnetizing magnetic flux is not substantially blocked from traveling to permanent magnet 18. If Q is greater than 3 Lg, the magnetic field produced by magnet 18 is weakened, so that the motor produces lower output or greater cogging torque due to abrupt change of the magnetic field. An opening angle "Am" of slit 16 with regard to rotor center-angle "Am" being over an end of permanent magnet 18-is set to meet this relation;

$$(1 / 10)As < Am < (1 / 4)As$$

where "As" is an opening angle of tooth 4.

When the opening angle "Am" of slit 16 is less than (1/10)As, the effect discussed above cannot be produced, and when "Am" is greater than (1/4)As, the motor produces lower output or greater cogging torque.

(Exemplary Embodiment 9)

Motor 31 comprises stator 1, rotor 2 and permanent magnet 6 is disposed to rotor 2. The construction of motor 31 can be the same as those used in embodiments 1 through 8.

Motor 31 and compressor 32 are disposed in airtight container 33. Accumulator 35 is added to sucking pipe 34 of compressor 32, and discharging pipe 36 is disposed at an upper section of container 33. The compressor is thus made up.

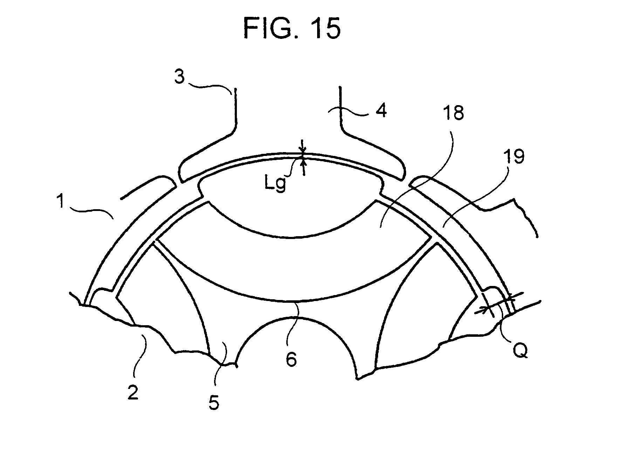

Fig. 13 and Fig. 14 illustrate an example where slit 16 is formed within the outer rim of rotor core 5. Slit 16 can be replaced with cut-away section 19 as shown in Fig. 15. In this case, a size of cut-away section 19 is determined in the same manner as discussed above.

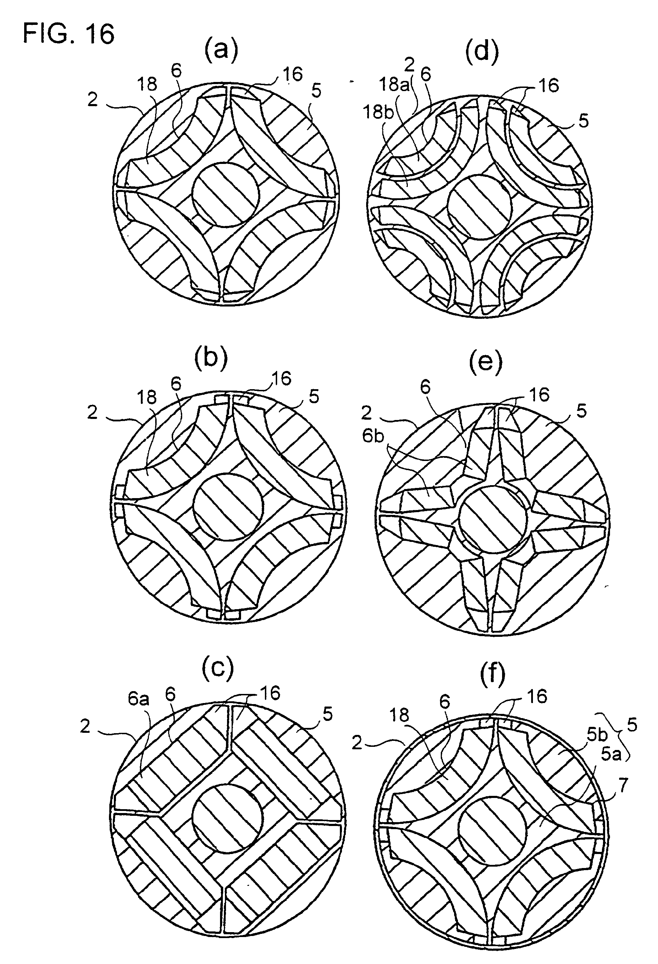

Fig. 16 illustrates rotors having interior-permanent-magnets other than the embodiments discussed above. Fig. 16(a) and Fig. 16(b) illustrate the embodiment modified from the embodiment 8 regarding the opening angle and shape of slit 16. The embodiment shown in Fig. 16(c) uses permanent magnet 6 made of plate-type magnet 6a. Fig. 16(d) illustrates permanent magnet 6 comprising reversely arced permanent magnets 18a and 18b disposed in multistage, parallel with each other, in the radial direction. Slits 16 are formed at respective ends of reversely arced permanent magnets 18a and 18b. Fig. 16(e) illustrates an embodiment where permanent magnet 6 is formed of a pair of plate-type magnets 6b, the pair plates form an angle tapering outward in the radial direction. Fig. 16(f) illustrates an embodiment where reversely arced permanent magnets 18 are used. Rotor core 5 comprises rotor core body 5a and rotor core cap 5b. Rotor core body 5a arranges magnets 18 to surround body 5a and forms star-like shape in cross sectional view. Rotor core cap 5b and body 5a hold magnet 18 in between. Hollow thin-cylinder 7 is fit to outer wall of rotor core 5 thereby maintaining the strength against centrifugal force. Slit 16 is formed at a place surrounded by the end of body 5a, end of cap 5b and cylinder 7.

The embodiments previously discussed describe the permanent magnet synchronous motor in a sensor-less operation; however, those embodiments can be applied to the motor having a sensor with the same effect, i.e. demagnetization is restrained.

Industrial Applicability

In a permanent magnet synchronous motor according to claim 1 with a stator having concentrated windings, the following relation is established:

$$0.3\,\mathrm{Lg} < \mathrm{La} \leqq 2.0\,\mathrm{Lg},$$

where La is a clearance between respective teeth, Lg is an air gap between the stator and rotor. Since the clearance between teeth is set at not more than two times of the air gap Lg, demagnetizing magnetic flux is restrained from flowing toward the rotor. Further when polarities of the coil and rotor oppose each other, the rotor magnets are not easily subjected to the demagnetizing magnetic field. As a result, the withstanding force against the demagnetization is enhanced. The relation 2 Lg < Lb < 5 Lg is established so that the demagnetizing magnetic flux can flow toward the teeth and can be restrained from flowing toward the rotor, where Lg is an air gap between the stator and rotor. As a result, the same effect as discussed above can be expected. Further, when the two relations discussed above are satisfied, the greater withstanding force against demagnetization is obtainable.

In an edge of tooth of the stator, i.e., the edge of trailing side in the rotating direction of the rotor out of the edges of teeth opposing with each other, or both of these edges, the side facing the rotor is cut away so that an air gap on tooth edge can be enlarged. This can restrain the demagnetizing magnetic flux from flowing toward the rotor. As a result, the same effect discussed above is obtainable. Further, in this case, at the edge where the rim side facing the rotor has been cut away, the other side to the rotor is protruded so that the depth of the tooth edge is maintained, and this can restrain the demagnetizing magnetic flux from running toward the rotor. As a result, the withstanding force against the demagnetization can be further enhanced. When the three conditions discussed above are satisfied, the greater withstanding force against the demagnetization is obtainable.

When the permanent magnets of the rotor are made of ferrite magnet-inexpensive than rare earth magnet and vulnerable to demagnetization-the structure discussed above can enhance the withstanding force of the inexpensive permanent magnets against the demagnetization. Therefore, an outstanding effect can be produced in this case. The stator formed by the divided cores realizes independent and efficient winding on respective divided cores before they are assembled into the stator. This can substantially increase the productivity and lower the cost. If this structure is applied to the motor driven by the sensor-less mechanism, an outstanding effect is expected because the sensor-less operation, in general, is vulnerable to demagnetization. In addition to the effects discussed above, when this permanent magnet synchronous motor is employed in compressors of air-conditioners or electric refrigerators, substantial effects are obtainable by lowering the costs of these appliances.

**Claims**

1. A permanent magnet synchronous motor comprising:

   a rotor having a rotor core (2) and a permanent magnet (6) mounted on an outer wall of the rotor core;
   a stator (1) having teeth (4) and concentrated windings such that adjacent teeth have different polarities;
   **characterized in that**, to prevent demagnetization of the permanent magnet (6), the rotor (2) and the stator (1) are arranged such that 0.3 Lg < La ≦ 2.0 Lg and such that
   2 Lg < Lb < 5 Lg,
   wherein
   La is a clearance between the adjacent teeth of the stator;
   Lb is a depth of a side edge of each tooth; and
   Lg is an air gap between the rotor and the stator.

2. The motor of claim 1, wherein an edge section (9) on at least one end of the teeth (4), the edge section facing to the rotor, is cut away.

3. The motor of claim 2, wherein the edge section (9) being cut away is provided on the trailing side in a rotating direction of the rotor.

4. The motor of claim 2 or 3, wherein, at the end of the teeth where the edge section is cut away, another side edge to the rotor is protruded for maintaining a depth of the end of the teeth.

5. The motor of any of claims 1 to 4, wherein the rotor includes a ferrite permanent magnet.

6. The motor of any of claims 1 to 5, wherein the stator includes a divided core.

7. The motor of any of claims 1 to 6, wherein the rotor (2) and the stator (1) are adapted to operate sensor-free.

8. A compressor for an air-conditioner or an electric refrigerator, including a motor according to any of claims 1 to 7.

**Patentansprüche**

1. Permanentmagnet-Sychronmotor, der umfasst:

    einen Rotor mit einem Rotorblechpaket (2) und einem Permanentmagneten (6), der an einer Außenwand des Rotorblechpaketes angebracht ist;
    einen Stator (1), der Zähne (4) und konzentrierte Windungen so aufweist, dass benachbarte Zähne unterschiedliche Polaritäten haben;

    **dadurch gekennzeichnet, dass**
    um Demagnetisierung des Permanentmagneten (6) zu verhindern, der Rotor (2) und der Stator (1) so angeordnet sind, dass $0,3 \, Lg < La \leq 2,0 \, Lg$, und so, dass
    $2 \, Lg < Lb < 5 \, Lg$,
    wobei
    La ein Zwischenraum zwischen den benachbarten Zähnen des Stators ist;
    Lb eine Tiefe einer Seitenkante jedes Zahns ist; und
    Lg ein Luftspalt zwischen dem Rotor und dem Stator ist.

2. Motor nach Anspruch 1, wobei ein Kantenabschnitt (9) an wenigstens einem Ende der Zähne (4) weggeschnitten ist und der Kantenabschnitt dem Rotor zugewandt ist.

3. Motor nach Anspruch 2, wobei der Kantenabschnitt (9), der weggeschnitten ist, an der hinteren Seite in der Drehrichtung des Rotors vorhanden ist.

4. Motor nach Anspruch 2 oder 3, wobei an dem Ende der Zähne, an dem der Kantenabschnitt weggeschnitten ist, eine weitere Seitenkante zu dem Rotor vorsteht, um eine Tiefe des Endes der Zähne aufrechtzuerhalten.

5. Motor nach einem der Ansprüche 1 bis 4, wobei der Rotor einen Ferrit-Permanentmagneten enthält.

6. Motor nach einem der Ansprüche 1 bis 5, wobei der Stator ein unterteiltes Blechpaket enthält.

7. Motor nach einem der Ansprüche 1 bis 6, wobei der Rotor (2) und der Stator (1) so eingerichtet sind, dass sie sensorlos arbeiten.

8. Kompressor für eine Klimaanlage oder eine elektrische Kältemaschine, der einen Motor nach einem der Ansprüche 1 bis 7 enthält.

**Revendications**

1. Moteur synchrone à aimant permanent comprenant :

    un rotor comportant un noyau de rotor (2) et un aimant permanent (6) monté sur une paroi externe du noyau de rotor ;
    un stator (1) comportant des dents (4) et des enroulements concentrés de telle sorte que les dents adjacentes ont des polarités différentes ;
    **caractérisé en ce que**
    pour empêcher une démagnétisation de l'aimant permanent (6), le rotor (2) et le stator (1) sont agencés de sorte que $0,3 \, Lg < La \leq 2,0 \, lg$ et de sorte que $2 \, Lg < Lb < 5 \, Lg$,
    où
    La est un dégagement entre les dents adjacentes du stator ;
    Lb est une profondeur d'un bord latéral de chaque dent ; et
    Lg est un entrefer entre le rotor et le stator.

2. Moteur selon la revendication 1, dans lequel une section de bord (9) sur au moins une extrémité des dents (4), la section de bord faisant face au rotor, est découpée.

3. Moteur selon la revendication 2, dans lequel la section de bord (9) découpée est prévue sur le côté postérieur dans une direction de rotation du rotor.

4. Moteur selon la revendication 2 ou 3, dans lequel, à l'extrémité des dents où la section de bord est découpée, un autre bord latéral par rapport au rotor fait saillie pour maintenir une profondeur de l'extrémité des dents.

**5.** Moteur selon l'une quelconque des revendications 1 à 4, dans lequel le rotor inclut un aimant permanent en ferrite.

**6.** Moteur selon l'une quelconque des revendications 1 à 5, dans lequel le stator inclut un noyau divisé.

**7.** Moteur selon l'une quelconque des revendications 1 à 6, dans lequel le rotor (2) et le stator (1) sont adaptés pour fonctionner sans capteur.

**8.** Compresseur d'un climatiseur ou d'un réfrigérateur électrique, incluant un moteur selon l'une quelconque des revendications 1 à 7.

# FIG. 1

(a)

(b)

# FIG. 2

# FIG. 3

# FIG. 4

# FIG. 5

# FIG. 6

(a)

(b)

# FIG. 7

# FIG. 8

# FIG. 9

(a)

(d)

(b)

(c)

# FIG. 10

(a)

(b)

(c)

(d)

# FIG. 11

# FIG. 12

# FIG. 13

# FIG. 14

EP 1 014 541 B1

FIG. 15

EP 1 014 541 B1

FIG. 16

(a)

(d)

(b)

(e)

(c)

(f)

21

# FIG. 17

(a)

(b)

## FIG. 18

(a)

(b)

## FIG. 19

# FIG. 20

(a)

(b)

# FIG. 21